(19) **Europäisches Patentamt**

**European Patent Office**

**Office européen des brevets**

(11) **EP 0 941 505 B1**

(12) **EUROPÄISCHE PATENTSCHRIFT**

| | |
|---|---|
| (45) Veröffentlichungstag und Bekanntmachung des Hinweises auf die Patenterteilung:<br>**13.03.2002 Patentblatt 2002/11** | (51) Int Cl.[7]: **G05B 17/02** |
| (21) Anmeldenummer: **97945732.2** | (86) Internationale Anmeldenummer:<br>**PCT/DE97/02318** |
| (22) Anmeldetag: **09.10.1997** | (87) Internationale Veröffentlichungsnummer:<br>**WO 98/24010 (04.06.1998 Gazette 1998/22)** |

(54) **VERFAHREN ZUR NEURONALEN MODELLIERUNG DER ABHÄNGIGKEITEN VON EINFLUSSGRÖSSEN EINES TECHNISCHEN SYSTEMS**

METHOD FOR NEURAL MODELLING THE FORMS OF DEPENDENCY OF A TECHNICAL SYSTEM UPON PARAMETERS

PROCEDE DE MODELISATION NEURONIQUE DES FORMES D'ASSERVISSEMENT D'UN SYSTEME TECHNIQUE A DES PARAMETRES

| | |
|---|---|
| (84) Benannte Vertragsstaaten:<br>**AT DE DK FI GB IT NL** | (56) Entgegenhaltungen:<br>• **KONIG Y ET AL: "REMAP - EXPERIMENTS WITH SPEECH RECOGNITION" 1996 IEEE INTERNATIONAL CONFERENCE ON ACOUSTICS, SPEECH, AND SIGNAL PROCESSING - PROCEEDINGS. (ICASSP), ATLANTA, MAY 7- 10, 1996, Bd. VOL. 6, Nr. CONF. 21, 7.Mai 1996, INSTITUTE OF ELECTRICAL AND ELECTRONICS ENGINEERS, Seiten 3350-3353, XP000681762**<br>• **D.DAVIS ET AL: "SOLVING INVERSE PROBLEMS BY BAYESIAN ITERATIVE INVERSION OF A FORWARD MODEL WITH APPLICATIONS TO PARAMETER MAPPING USING SMMR REMOTE SENSING DATA" IEEE TRANSACTIONS ON GEOSCIENCE AND REMOTE SENSING , Bd. 33, Nr. 5, September 1995, USA, Seiten 1182-1193, XP002052852** |
| (30) Priorität: **27.11.1996 DE 19649167** | |
| (43) Veröffentlichungstag der Anmeldung:<br>**15.09.1999 Patentblatt 1999/37** | |
| (73) Patentinhaber: **SIEMENS AKTIENGESELLSCHAFT**<br>**80333 München (DE)** | |
| (72) Erfinder:<br>• **HOFMANN, Reimar**<br>**D-80796 München (DE)**<br>• **TRESP, Volker**<br>**D-80539 München (DE)** | |

## Beschreibung

Die Erfindung bezieht sich auf ein Verfahren zur Modellierung von Einflußgrößen auf ein technisches System, wobei beim Betrieb des technischen Systems fallweise verschiedene Größen bekannt und verschiedene Größen unbekannt sind.

Häufig besteht bei technischen Prozessen, wie beispielsweise chemischen Reaktionsprozessen oder Fertigungsprozessen das Problem, daß einzelne Einflußgrößen dieser Prozesse sehr schwierig, technisch sehr aufwendig, oder nur mit hohem Zeitaufwand zu bestimmen sind. Bei einzelnen Anwendungen kann es auch vorkommen, daß die bekannten und die unbekannten Größen von Fall zu Fall variieren. Es besteht deshalb der Wunsch, für jeden Fall einzelne Einflußgrößen welche unbekannt sind, anhand der bekannten Einflußgrößen des technischen Systems bestimmen, vorhersagen oder ermitteln zu können. Hierzu ist es erforderlich, die einzelnen Größen und deren Abhängigkeiten voneinander auf geeignete Weise zu modellieren. Das allgemeinste Modell stellt in diesem Fall für diskrete Größen die gemeinsame Wahrscheinlichkeit der Einflußgrößen und für kontinuierliche Größen die gemeinsame Wahrscheinlichkeitsdichte oder Mischformen von beiden, wenn sowohl diskrete als auch kontinuierliche Größen vorhanden sind, dar. Eine direkte Modellierung der gemeinsamen Wahrscheinlichkeitsdichte ist insbesondere für den Fall der kontinuierlichen Variablen sehr schwierig und kaum durchführbar. Aus diesem Grund wird versucht die gemeinsame Wahrscheinlichkeitsdichte anhand bedingter Wahrscheinlichkeitsdichten für die einzelnen Variablen, welche die Einflußgrößen des technischen Prozesses darstellen, zu modellieren. Hierbei werden die gegenseitigen Abhängigkeiten der einzelnen Einflußgrößen als bedingte Wahrscheinlichkeiten auf den jeweiligen Variablen modelliert. Wenn sich bestimmte Einflußgrößen nicht direkt beeinflussen, d.h. wenn bestimmte Unabhängigkeiten existieren, dann läßt sich das ausnutzen, um die Komplexität des Problems zu vereinfachen. Ein Beispiel für die Reduktion der Komplexität solcher Modellierungsprobleme, stellt die Modellierung der gemeinsamen Wahrscheinlichkeitsdichte mit Hilfe von Bayesianischen Netzen dar. Bei den Bayesianischen Netzen handelt es sich um spezielle Dichteschätzer, bei denen bedingte Unabhängigkeiten und Abhängigkeiten zwischen den einzelnen Variablen durch eine gerichteten Graphen repräsentiert werden [2]. Die gemeinsame Wahrscheinlichkeitsdichte wird dabei als Produkt bedingter Dichten faktorisiert. Falls bedingte Unabhängigkeiten zwischen den einzelnen Variablen bestehen, so lassen sich die einzelnen Faktoren vereinfachen und die gemeinsame Wahrscheinlichkeit wird also durch eine Menge von bedingten Wahrscheinlichkeitsmodellen beschrieben. Das Vorhersagemodell für eine Variable, d. h. die bedingte Wahrscheinlichkeit einer Variable, gegeben alle anderen Variablen, läßt sich aus diesen Faktoren berechnen. Im allgemeinen gilt:

$$P\bigl(X_i \bigm| X_1 \ldots X_{i-1} X_{i+1} \ldots X_n\bigr) \propto P\bigl(X_i \bigm| X_1, \ldots, X_{i-1}\bigr) \prod_{j=i+1}^{n} P\bigl(X_j \bigm| X_1, \ldots, X_{j-1}\bigr)$$

Aus [3] ist die Modellierung eines technischen Systems unter Verwendung von Bayesianischen Netzen bekannt. Die Vorgehensweise der Modellierung solcher Probleme mit Hilfe von Bayesianischen Netzen hat jedoch bei mehreren unbekannten Variablen Nachteile. Durch die Modellierung und die Beschreibung des Problems mit Hilfe der gerichteten Graphen der Bayesianischen Netze, werden für die einzelnen bedingten Wahrscheinlichkeiten als deren Bestimmungsvoraussetzung, die gegebenen Variablen bereits auf lediglich die Eltern der jeweiligen Variablen reduziert. Dadurch kommt es zu Problemen, falls bei der Bestimmung von mehreren Variablen mit Hilfe des Gibbs-Samplings eine bedingte Wahrscheinlichkeit bestimmt werden muß, die zur Beschreibung des Bayesianischen Netzes nicht erforderlich war. Insbesondere kommt es dabei zu Problemen, falls sich die Abhängigkeiten der bedingten Wahrscheinlichkeiten in Bezug auf die vorhandenen Variablen, welche als gegeben angenommen werden, umkehren, da beim Umkehren einer Abhängigkeit bei der eine Variable, gegeben Werte der sie beeinflussenden Variablen, normalverteilt ist, die inverse Verteilung sehr kompliziert sein kann.

Der Erfindung liegt also die Aufgabe zugrunde, ein Verfahren und eine Anordnung zur neuronalen Modellierung der Abhängigkeiten von Einflußgrößen eines technischen Systems anzugeben, welches Verfahren und welche Anordnung die Nachteile der Modellierung mit Bayesianischen Netzen nicht aufweist.

Diese Aufgabe wird durch das Verfahren gemäß Patentanspruch 1 und durch die Anordnung gemäß Patentanspruch 10 gelöst.

Weiterbildungen der Erfindung ergeben sich aus den abhängigen Ansprüchen.

Das erfindungsgemäße Verfahren bietet insbesondere den Vorteil, daß zur Beschreibung des Problems und zur neuronalen Modellierung der bedingten Wahrscheinlichkeiten genau jene bedingte Wahrscheinlichkeiten verwendet werden, welche später auch bei der Suche von mehreren Einflußgrößen mit Hilfe des Gibbs-Samplings verwendet werden können. Hierdurch erspart man sich komplizierte mathematische Umformungen.

Besonders vorteilhaft werden beim Training der neuronalen Modelle nach dem erfindungsgemäßen Verfahren, als gegebene Variablen lediglich die Variablen des Markov Blankets in [1] erklärt, der jeweiligen bedingten Wahrscheinlichkeitdichte vorgegeben, da damit Redundanzen zuverlässig vermieden werden können und eine schnellere Berechenbarkeit der Ausgangsgrößen gegeben ist.

Vorteilhaft können beim erfindungsgemäßen Verfahren, wie auch bei anderen neuronalen Modellierungsverfahren die Abhängigkeiten der Eingangsgrößen durch Rückwärtsverfolgung der Neuronengewichte im neuronalen Netz bestimmt werden.

Vorteilhaft können mehrere unbekannte Einflußgrößen nach dem erfindungsgemäßen Verfahren anhand der bekannten Einflußgrößen mit Hilfe des standardisierten Gibbs-Samplings in [2] erklärt, geschätzt werden.

Vorteilhaft kann beim erfindungsgemäßen Verfahren lediglich ein neuronales Netz eingesetzt werden, um alle bedingten Wahrscheinlichkeiten zu modellieren, falls es sich um eine nicht zeitkritische Anwendung handelt und Rechenaufwand eingespart werden soll.

Besonders vorteilhaft kann jedes einzelne neuronale Modell mit einem neuronalen Netz auf einem separaten Prozessor modelliert werden, um möglichst schnell und möglichst viele Ergebnisse in kurzer Zeit erhalten zu können.

Besonders vorteilhaft kann die Einflußgröße eines technischen Systems, welche beispielsweise eingestellt, bestimmt oder geregelt werden sollen, nach dem erfindungsgemäßen Verfahren modelliert werden, anstatt aufwendig am technischen System selbst gemessen zu werden.

Vorteilhaft eignet sich das erfindungsgemäße Verfahren zur neuronalen Modellierung sowohl für diskrete Variable als Eingangsgrößen, als auch für kontinuierliche Variablen.

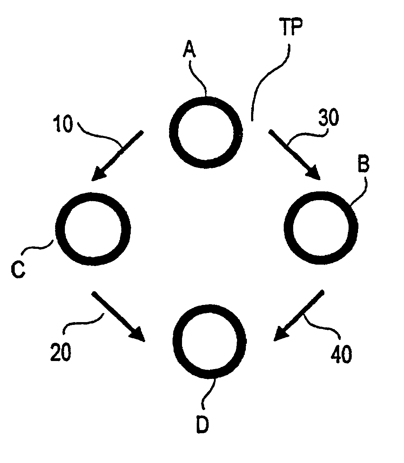

Im folgenden wird die Erfindung beispielhaft anhand einer Figur weiter erläutert. Die Figur zeigt als Beispiel ein technisches System TP, welches beispielsweise eine chemische Reaktion von Komponenten A, B, C und D symbolisiert. Beispielsweise wird die Komponente A ständig zugegeben, so daß sie mit einer Konzentration KA vorhanden ist, und sie zerfällt in Komponenten B und C, welche in Konzentrationen KC und KB vorliegen. Die Übergänge von A nach C sind mit 10 und von A nach B mit 30 bezeichnet. Beispielsweise kann diese Reaktion zeitabhängig erfolgen. Die Stoffe C und B können dann zu einem Stoff D, der dann dem Prozeß z.B. durch Ausfällen entzogen wird, reagieren, was über die Pfeile 20 und 40 symbolisiert ist. Falls nun für die einzelnen Konzentrationen KA, KB, KC und KD nur Wahrscheinlichkeitsverteilungen zur Verfügung stehen, so müßte nach dem erfindungsgemäßen Verfahren zunächst das gesamte technische System beispielsweise in einem chemischen Reaktor eine gewisse Zeit lang beobachtet werden, um Meßwerte für die einzelnen Konzentrationen zu sammeln. Gewünscht wäre für diesen Fall die gemeinsame Wahrscheinlichkeitsdichte p(A, B, C, D). Nach dem erfindungsgemäßen Verfahren wird die Komplexität dieses Problems dadurch reduziert, daß für die einzelnen Stoffe bedingte Wahrscheinlichkeiten als neuronale Modelle modelliert werden. Diese Modelle können anhand von Daten trainiert werden, welche dem realen System entnommen wurden. Hierzu wären also beispielsweise bei dem vorliegenden Problem die bedingten Wahrscheinlichkeitsdichten p(A|B, C, D), p(B|, A, C, D), p(C|A, B, D) und p(D|A, B, C) zu modellieren. Da nach dem erfindungsgemäßen Verfahren zur Modellierung der bedingten Wahrscheinlichkeiten als gegebenen Variablen lediglich die Markov Blankets berücksichtigt werden müssen, vereinfachen sich die bedingten Wahrscheinlichkeitsdichten für p(A) zu p(A|B, C) und p(D) zu p(D|B, C).

Falls nun beim gegebenen Problem die Werte von C und D nicht verfügbar wären, so würde ein Gibbs-Sampling mit Hilfe der modellierten bedingten Wahrscheinlichkeitsdichten für sämtliche Stoffe durchgeführt, um iterativ über die Modelle zu diesen Werten zu gelangen. Es ist hierbei zu beachten, daß es sich bei diesem Problem lediglich um ein Beispiel handelt. Das erfindungsgemäße Verfahren läßt sich beispielsweise auch sehr gut bei Diagnoseverfahren einsetzen, bei denen beispielsweise in technischen Prozessen bestimmte Größen verfügbar sind und andere Größen vorhergesagt werden sollen, um ein korrektes Verhalten des Systems beurteilen zu können. Gegenüber der Modellierung mit Hilfe von Bayesianischen Netzen hat das erfindungsgemäße Verfahren den Vorteil, daß der einfachste Anwendungsfall, die Vorhersage einer Variable aus allen anderen, wesentlich vereinfacht wird. Außerdem läßt die direkte Modellierung ein genaueres Vorhersagemodell erwarten, als wenn das Vorhersagemodell aus mehreren anderen Modellen abgeleitet würde. Weiterhin bietet das erfindungsgemäße Verfahren den Vorteil, daß das Lernen der Vorwärtsmodelle in gleicher Weise möglich ist, wie das Lernen der einzelnen Modelle eines Bayesianischen Netzes. Das Strukturlernen ist jedoch wesentlich einfacher, da die Reihenfolge der Variablen, d. h. die Richtung der Pfeile im Bayesianischen Netz nicht gelernt werden muß.

Als weitere Beispiele für die Anwendung des erfindungsgemäßen Verfahrens können ein Herstellungsprozeß, bei dem für jede produzierte Einheit bestimmte Variablen vorliegen und eine Diagnosenstellung, anhand von Befunden aus Untersuchungen dienen. Beim technischen Prozeß liegt beispielsweise als Einflußgröße des technischen Prozesses die zugegebenen Menge verschiedener Chemikalien, die Temperatur, die Rührintensität, und die Festigkeit des Endproduktes, sowie die Konzentration bestimmter Nebenprodukte vor. Einige dieser Werte, wie z. B. die Konzentrationen bestimmter Nebenprodukte sind teuer zu messen und deshalb werden sie nur selten gemessen, falls beispielsweise der Verdacht besteht, daß der Prozeß nicht mehr ordnungsgemäß abläuft. In diesem Fall könnte das Ziel beim Einsatz des erfindungsgemäßen Verfahrens sein, die fehlenden Variablen aus meßbaren Variablen vorherzusagen, um einem Operateur, oder einem automatischen Verfahren eine bessere Entscheidungsgrundlage zur Regelung des Prozesses zu geben. Ein weiteres Ziel könnte es sein automatisch Vorschläge zu erhalten, ob und welche Größen zu messen sind. Weiterhin könnte es ein Ziel sein Anomalien des Prozesses zu erkennen, um ggf. einen Alarm auszulösen.

Für das Beispiel der Diagnose an einem Kfz, liegen z. B. für unterschiedliche Kfz Diagnosebefunde aus einzelnen Untersuchungen an Schlüsselkomponenten des Fahrzeuges vor. Beispielsweise sind bei dem Kfz nur ein Teil der in Frage kommenden Untersuchungen durchgeführt worden, um Arbeitszeit einzusparen. Die bestehende Aufgabe für den Einsatz des erfindungsgemäßen Verfahrens könnte in diesem Fall sein, die Wahrscheinlichkeiten für das Vorlegen bestimmter Defekte zu bestimmen, bzw. Wahrscheinlichkeitsaussagen über zu erwartende Befunde bei weiteren diagnostischen Untersuchungen zu machen. Ein weiteres Ziel könnte es dabei sein weitere sinnvolle Diagnoseschritte vorzuschlagen. Diese Vorgehensweise läßt sich auf jegliche Art von technischen Daten anwenden, die aus diagnostischen Befunden gewonnen werden.

Literatur:

[1] Judea Pearl: "Probabilistic Reasoning In Intelligent Systems", Morgan Kaufmann Publishers, Inc., San Francisco, California, S. 96 - 97 (1988);
[2] Finn V. Jensen: "An Introduction to Bayesian Networks", Springer-Verlag New York, Inc., S. 1 - 29 (1996);
[3] Davis D., et al.: "Solving Inverse Problems by Bayesian Iterative Inversion of a Forward Model with Applications to Parameter Mapping Using SMMR Remote Sensing Data", IEEE Transactions on Geoscience and remote sensing, Bd. 33, Nr. 5, September 1995, USA, S. 1182 - 1193;

**Patentansprüche**

1.  Verfahren zur neuronalen Modellierung der Abhängigkeiten von Einflußgrößen auf ein technisches System mit folgenden Verfahrenschritten

    a) es werden alle zu modellierenden Einflußgrößen durch Festlegung bestimmt;
    b) es werden für alle zu modellierenden Einflußgrößen neuronale Modelle derart trainiert, daß je Einflußgröße die bedingte Wahrscheinlichkeit bzw. Wahrscheinlichkeitsdichte dieser Einflußgröße in Abhängigkeit von höchstens allen anderen zu modellierenden Einflußgrößen als neuronales Modell zur Verfügung steht, wobei zum Training der neuronalen Modelle auf Basis des technischen Systems gemessene und/oder geschätzte Werte von Einflußgrößen verwendet werden;
    c) eine unbekannte Einflußgröße wird unter Verwendung mindestens eines der neuronalen Modelle anhand der anderen Einflußgrößen bestimmt.

2.  Verfahren nach Anspruch 1,
    bei dem von mindestens zwei voneinander abhängigen Einflußgrößen deren Abhängigkeit bestimmt wird und ein neuronales Modell von einer bedingten Wahrscheinlichkeit oder einer bedingten Wahrscheinlichkeitsdichte dem diese abhängigen Einflußgrößen zugrunde liegen, mit dem Markov-Blanket dieser Einflußgrößen trainiert wird.

3.  Verfahren nach Anspruch 2,
    bei dem die gegenseitige Abhängigkeit von Einflußgrößen durch Rückwärtsverfolgung der Neuronengewichte an einzelnen Neuronen eines neuronalen Modelles zum Eingang hin, festgestellt wird

4.  Verfahren nach einem der vorangehenden Ansprüche,
    bei dem zur Bestimmung von mindestens zwei unbekannten Einflußgrößen Gibbs-Sampling mit Werten durchgeführt wird, die von allen zur Verfügung stehenden neuronalen Modellen geliefert werden.

5.  Verfahren nach einem der vorangehenden Ansprüche, bei dem lediglich ein neuronales Netz zur Simulation aller bedingten Wahrscheinlichkeiten oder bedingten Wahrscheinlichkeitsdichten verwendet wird, indem je zu modellierender bedingter Wahrscheinlichkeit oder bedingter Wahrscheinlichkeitsdichte aktuell für das jeweilige Modell benötigte Neuronengewichte am neuronalen Netz eingestellt werden.

6.  Verfahren nach einem der Ansprüche 1 bis 4, bei dem für jedes neuronale Modell ein neuronales Netz zur Simulation der bedingten Wahrscheinlichkeiten oder der bedingten Wahrscheinlichkeitsdichten verwendet wird.

7.  Verfahren nach einem der vorangehenden Ansprüche, bei dem eine schlecht, oder technisch sehr aufwendig zu messende Einflußgröße beim Betrieb des technischen Systems lediglich modelliert und nicht gemessen wird.

8.  Verfahren nach einem der vorangehenden Ansprüche, bei dem eine diskrete Einflußgröße modelliert wird.

9.  Verfahren nach einem der Ansprüche 1 bis 7, bei dem eine kontinuierliche Einflußgröße modelliert wird.

10. Anordnung zur Bestimmung einer unbekannten Einflußgröße auf ein technisches System unter Verwendung von zu modellierenden Einflußgrößen des technischen Systems mit einem Prozessor, der derart eingerichtet ist, daß folgende Verfahrensschritte durchgeführt werden

    a) es werden alle zu modellierenden Einflußgrößen durch Festlegung bestimmt;
    b) es werden für alle zu modellierenden Einflußgrößen neuronale Modelle derart trainiert, daß je Einflußgröße die bedingte Wahrscheinlichkeit oder die bedingte Wahrscheinlichkeitsdichte dieser Einflußgröße in Abhängigkeit von höchstens allen anderen zu modellierenden Einflußgrößen als neuronales Modell zur Verfügung steht, wobei zum Training der neuronalen Modelle auf Basis des technischen Systems gemessene und/oder geschätzte Werte von Einflußgrößen verwendet werden;
    c) eine unbekannte Einflußgröße wird unter Verwendung mindestens eines der neuronalen Modelle anhand der anderen Einflußgrößen bestimmt.

**Claims**

1.  Method for neural modelling of the relationships between influencing variables on a technical system, comprising the following method steps:

    a) all the influencing variables to be modelled are established by definition;
    b) neural models are trained for all the influencing variables to be modelled such that for each influencing variable the conditional probability and/or the probability density of this influencing variable are/is available as a neural model as a function of at most all the other influencing variables to be modelled, with measured and/or estimated values of the influencing variables being used for training the neural models on the basis of the technical system; and
    c) an unknown influencing variable being established using at least one of the neural models on the basis of the other influencing variables.

2.  Method according to Claim 1,
    in which the relationship between at least two mutually dependent influencing variables is established and these dependent influencing variables are used as the basis for a conditional probability or a conditional probability density for a neural model which is trained using the Markov blanket of these influencing variables.

3.  Method according to Claim 2,
    in which the mutual relationship between the influencing variables is defined by backward tracking of the neural weights applied to individual neurons in a neural model, towards the input.

4.  Method according to one of the preceding claims, in which Gibbs sampling is carried out in order to establish at least two unknown influencing variables, using values which are supplied from all the available neural models.

5.  Method according to one of the preceding claims, in which only one neural network is used for simulation of all the conditional probabilities or conditional probability densities, in that neural weights required for the respective model at any given time are applied to the neural network depending on the conditional probability to be modelled or the conditional probability density.

6.  Method according to one of Claims 1 to 4, in which a neural network is used for simulation of the conditional probabilities or of the conditional probability densities for each neural model.

7.  Method according to one of the preceding claims, in which an influencing variable which can be measured only poorly or is technically very complex to measure is only modelled and is not measured during operation of the technical system.

**8.** Method according to one of the preceding claims,
in which one discrete influencing variable is modelled.

**9.** Method according to one of Claims 1 to 7, in which one continuous influencing variable is modelled.

**10.** Arrangement for establishing an unknown influencing variable on a technical system using influencing variables which are to be modelled for the technical system, by means of a processor which is set up such that the following method steps are carried out:

a) all the influencing variables to be modelled are established by definition;
b) neural models are trained for all the influencing variables to be modelled such that the conditional probability and/or the probability density of this influencing variable for each influencing variable are/is available as a neural model as a function of at most all the other influencing variables to be modelled, with measured and/or estimated values of the influencing variables being used for training the neural models on the basis of the technical system; and
c) an unknown influencing variable being established using at least one of the neural models on the basis of the other influencing variables.

## Revendications

**1.** Procédé de modélisation neuronale des formes d'asservissement d'un système technique à des paramètres, comprenant les étapes suivantes :

a) tous les paramètres à modéliser font l'objet d'une détermination ;
b) pour tous les paramètres à modéliser, des modèles neuronaux sont soumis à un apprentissage de manière à ce que, pour chaque paramètre, on dispose, en tant que modèle neuronal, de la probabilité resp. densité de probabilité conditionnelle de ce paramètre en fonction, tout au plus, de tous les autres paramètres à modéliser, des valeurs des paramètres mesurées et/ou estimées sur la base du système technique étant utilisées pour procéder à l'apprentissage des modèles neuronaux ;
c) un paramètre inconnu est déterminé en utilisant au moins un des modèles neuronaux, sur la base des autres paramètres.

**2.** Procédé selon la revendication 1, dans lequel on détermine la dépendance d'au moins deux paramètres dépendants l'un de l'autre et on a recours, pour l'apprentissage d'un modèle neuronal d'une probabilité conditionnelle ou d'une densité de probabilité conditionnelle à la base duquel se trouvent ces paramètres dépendants, à la couverture de Markov de ces paramètres.

**3.** Procédé selon la revendication 2, dans lequel la dépendance réciproque des paramètres est déterminée par la rétropoursuite des poids neuroniques au niveau des neurones individuels d'un modèle neuronal en direction de l'entrée.

**4.** Procédé selon l'une des revendications précédentes, dans lequel, pour déterminer au moins deux paramètres inconnus, on procède à un échantillonnage de Gibbs avec des valeurs qui sont fournies par tous les modèles neuronaux disponibles.

**5.** Procédé selon l'une des revendications précédentes, dans lequel on utilise un seul réseau neuronal pour simuler toutes les probabilités conditionnelles ou densités de probabilité conditionnelles, en utilisant, pour chaque probabilité conditionnelle ou densité de probabilité conditionnelle à modéliser, les poids neuroniques actuellement nécessaires pour le modèle respectif au niveau du réseau neuronal.

**6.** Procédé selon l'une des revendications 1 à 4, dans lequel on utilise, pour chaque modèle neuronal, un réseau neuronal pour la simulation des probabilités conditionnelles ou des densités de probabilité conditionnelles.

**7.** Procédé selon l'une des revendications précédentes, dans lequel, lors du fonctionnement du système technique, un paramètre dont la mesure s'avère difficile ou techniquement très coûteuse est simplement modélisé, et pas mesuré.

8. Procédé selon l'une des revendications précédentes, dans lequel on modélise un paramètre discret.

9. Procédé selon l'une des revendications 1 à 7, dans lequel on modélise un paramètre continu.

10. Dispositif pour déterminer un paramètre inconnu d'un système technique en utilisant des paramètres à modéliser du système technique, comprenant un processeur installé de manière à ce que l'on puisse procéder aux étapes suivantes :

   a) tous les paramètres à modéliser font l'objet d'une détermination ;
   b) pour tous les paramètres à modéliser, des modèles neuronaux sont soumis à un apprentissage de manière à ce que, pour chaque paramètre, on dispose, en tant que modèle neuronal, de la probabilité conditionnelle ou de la densité de probabilité conditionnelle de ce paramètre en fonction, tout au plus, de tous les autres paramètres à modéliser, des valeurs des paramètres mesurées et/ou estimées sur la base du système technique étant utilisées pour procéder à l'apprentissage des modèles neuronaux ;
   c) un paramètre inconnu est déterminé en utilisant au moins un des modèles neuronaux, sur la base des autres paramètres.